# EUROPÄISCHE PATENTSCHRIFT

(11) **EP 1 510 372 B1**
(45) Veröffentlichungstag und Bekanntmachung des Hinweises auf die Patenterteilung: **24.02.2010**
(21) Anmeldenummer: 04020075.0
(22) Anmeldetag: 24.08.2004
(51) Int. Cl.: B60D 1/36, B60D 1/06

(54) **Ankupplungshilfsvorrichtung**
Auxiliary coupling device
Dispositif d'attelage auxiliaire

(30) Priorität: 29.08.2003 DE 20313442 U
(43) Veröffentlichungstag der Anmeldung: 02.03.2005
(73) Patentinhaber: Reich KG, Regel- und Sicherheitstechnik, 35713 Eschenburg-Wissenbach (DE)
(72) Erfinder: Bender, Steffen, 35713 Eschenburg (DE)
(74) Vertreter: Hofstetter, Alfons J.

(56) Entgegenhaltungen:
- DE-A- 10 015 335
- US-A- 3 765 703
- US-A- 4 012 056
- US-A- 4 201 400
- US-A- 4 961 590
- US-A- 5 169 168
- US-A- 5 725 232
- US-A- 5 871 222

## Beschreibung

Die vorliegende Erfindung betrifft eine Ankupplungshilfsvorrichtung für Anhänger, insbesondere Wohnwagen, wobei die Ankupplungshilfsvorrichtung mindestens eine Anzeige- und Positioniervorrichtung zur Anzeige der Position einer Anhängerkupplung des Anhängers relativ zu einem Zugfahrzeug aufweist.

Derartige Ankupplungshilfsvorrichtungen sind aus dem Stand der Technik bekannt. Problematisch bei bekannten Ankupplungsvorrichtungen für Anhänger ist jedoch, dass beim Ankuppeln der Anhänger an ein Zugfahrzeug die Ankupplungshilfsvorrichtung für den Fahrzeuglenker nicht einsehbar ist. Dadurch ist ein exaktes Rangieren nur sehr schwer möglich, und des Öfteren kommt es dabei zu einem ungewollten Zusammenstoßen zwischen dem Zugfahrzeug und dem anzukuppelnden Anhänger. Dadurch können große Schäden sowohl an dem Zugfahrzeug, dem Anhänger als auch der Kupplungsvorrichtung auftreten.

Um dieses Problem zu lösen, wurde bisher versucht, über das Anbringen eines oder mehrerer Spiegel, das Anbringen einer Kamera oder über Abstandsmesser, z.B. auf Ultraschallbasis, ein derartiges ungewolltes Zusammenstoßen des Zugfahrzeuges mit dem Anhänger zu verhindern. Aus der DE 200 13 337 U1 ist eine weitere Ankupplungshilfsvorrichtung für ein Zugfahrzeug und ein anzukuppelndes Fahrzeug bekannt, wobei im Bereich der Kupplung des Anhängers wie auch im Bereich der Gegenkupplung des Zugfahrzeugs Positioniervorrichtungen angeordnet werden, welche die relative Lage des Zugfahrzeugs zu dem Anhänger anzeigen. Bei den Positioniervorrichtungen handelt es sich um Stangen, insbesondere um Teleskopstangen, die über das Zugfahrzeug hinausragen. Aus der DE 298 18 749 U1 ist eine weitere Zeigervorrichtung zum Anzeigen des Abstandes zwischen einem Vaterstück und einem Mutterstück einer Anhängerkupplung bekannt. Dabei ist an dem Mutterstück eine Ständervorrichtung mit einem gleitbar angebrachten Dorn angeordnet. Bei Berührung des Doms mit dem Zugfahrzeug neigt sich die Ständervorrichtung und gibt so einen Hinweis auf den Abstand zwischen Kupplung und Zugfahrzeug.

Nachteilig an den Ankupplungshilfsvorrichtungen gemäß dem Stand der Technik ist jedoch, dass diese ein ungewolltes Zusammenstoßen zwischen dem Zugfahrzeug und dem Anhänger nicht derart verhindern können, dass es zu einer Beschädigung des Zugfahrzeugs oder des Anhängers und insbesondere der Ankupplungshilfsvorrichtung kommt.

Um eine Beschädigung des Zugfahrzeugs oder des Anhängers bei einem ungewolltes Zusammenstoßen während eines Kupplungsvorgangs zu verhindern, werden sogenannte Rammschutze oder Prallelemente verwendet. Diese bestehen üblicherweise aus einem elastischen Material und werden auf oder vor der Kugelpfanne einer Kupplungsklaue des Anhängers angeordnet. Beispiele hierfür sind in der US-A-5 725 232, US 4012056 der DE 33 41 705 A1, der DE 39 15 944 A1 oder der DE 200 14 237 U1 offenbart. Nachteilig an diesen Vorrichtungen ist jedoch, dass auch diese mangels Orientierungshilfen ein ungewolltes Zusammenstoßen zwischen dem Zugfahrzeug und dem Anhänger nicht derart verhindern können, dass es zu einer Beschädigung des Zugfahrzeugs oder des Anhängers und insbesondere der Ankupplungshilfsvorrichtung kommt.

Es ist daher Aufgabe der vorliegenden Erfindung, eine Ankupplungshilfsvorrichtung der eingangs genannten Art bereitzustellen, die einerseits den Abstand und die relative Lage zwischen Zugfahrzeug und Anhänger anzeigt und andererseits bei einem ungewollten Zusammenstoß Beschädigungen am Anhänger und/oder am Zugfahrzeug, insbesondere der Ankupplungshilfsvorrichtung selbst weitestgehend verhindert.

Zur Lösung dieser Aufgabe dienen die Merkmale des unabhängigen Patentanspruches.

Vorteilhafte Ausgestaltungen sind in den Unteransprüchen beschrieben.

Eine erfindungsgemäße Ankupplungshilfsvorrichtung weist mindestens eine Anzeige- und Positioniervorrichtung zur Anzeige der Position einer Anhängerkupplung des Anhängers relativ zu einem Zugfahrzeug auf und besteht aus einem Grundkörper mit einer Kugel zum Eingriff und zur lösbaren Befestigung mit einer Kugelpfanne einer Kupplungsklaue des Anhängers und einen den Grundkörper zumindest teilweise in Richtung des Zugfahrzeugs umgebenden Rammschutz aus komprimierbarem Material, wobei die Anzeige- und Positioniervorrichtung in dem Grundkörper oder dem Rammschutz angeordnet ist. Bei einer Berührung des Rammschutzes erfolgt eine Komprimierung des Rammschutzes und dadurch bedingt eine Bewegung der Anzeige- und Positioniervorrichtung. Durch diese Bewegung wird dem Fahrer des Zugfahrzeuges angezeigt, dass die Kupplungsvorrichtung des Zugfahrzeuges nunmehr an der Ankupplungshilfsvorrichtung des Anhängers anliegt. Dadurch ist gewährleistet, dass einerseits die relative Lage zwischen dem Zugfahrzeug und dem Anhänger angezeigt wird und andererseits bei einem ungewollten Zusammenstoß zwischen dem Anhänger und dem Zugfahrzeug Beschädigungen an diesen zuverlässig verhindert werden. Die Kupplungsklaue ist zudem im Bereich der Kugelpfanne bei aufgesetzter Ankupplungshilfsvorrichtung gegenüber Schmutz und Staub geschützt. Des Weiteren kann die Ankupplungshilfsvorrichtung auch zur Unfallverhütung verwendet werden, da der Rammschutz verhindert, dass Personen sich an der Kupplungsklaue verletzen können. Üblicherweise besteht der können. Üblicherweise bestehen der Rammschutz oder der Grundkörper bzw. der Rammschutz und der Grundkörper aus Kunststoff oder Gummi. Dabei können der Rammschutz und der Grundkörper einstückig ausgebildet sein. Es ist aber auch möglich, dass der Rammschutz vom Grundkörper abnehmbar ausgebildet ist. In einer weiteren Ausgestaltung der Erfindung besteht der Rammschutz aus einem mit Gas oder Flüssigkeit gefüllten Volumen. Dies kann zum Beispiel ein Luftreifen oder -schlauch sein.

In einer weiteren vorteilhaften Ausgestaltung der Erfindung umschließen der Rammschutz oder eine den Grundkörper umgebende Seitenwand bzw. der Rammschutz und eine den Grundkörper umgebende Seitenwand die Kugel in Richtung des Zugfahrzeugs zumindest teilweise. Insbesondere können sie die Kugel in Richtung des Zugfahrzeugs zumindest teilweise halbkreisförmig umschließen. Es ist auch möglich, dass der Rammschutz oder eine den Grundkörper umgebende Seitenwand bzw. der Rammschutz und eine den Grundkörper umgebende Seitenwand über die Kugel hinausragend ausgebildet sind. Durch diese Maßnahmen ist gewährleistet, dass einerseits die Kugel der Ankupplungshilfsvorrichtung selbst gegenüber Beschädigungen weitgehend geschützt ist und andererseits auch die Kupplungsklaue des Anhängers.

In einer weiteren vorteilhaften Ausgestaltung der Erfindung besteht die Anzeige- und Positioniervorrichtung aus einer Stange mit mindestens einem Anzeigewimpel. Die Länge der Stange ist dabei variierbar.

In einer weiteren vorteilhaften Ausgestaltung der Erfindung weist die Kugel der Ankupplungshilfsvorrichtung einen Verriegelungsmechanismus zur Verriegelung der Kugel mit einer Kugelpfanne der Kupplungsklaue des Anhängers auf. Dadurch ist es möglich, dass die Ankupplungshilfsvorrichtung auch als Diebstahlschutz verwendet werden kann, da eine Ankupplung des Anhängers an ein Zugfahrzeug mit aufgesetzter Ankupplungshilfsvorrichtung nicht möglich ist. Der Verriegelungsmechanismus kann dabei vorteilhafterweise aus einer zweiteilig aufgebauten Kugel mit einer oberen und einer unteren Kugelhälfte sowie mindestens einem Sicherungsstift, der zwischen den Kugelhälften angeordnet ist, bestehen, wobei die obere Kugelhälfte gegenüber der unteren Kugelhälfte bewegbar ausgebildet ist und bei einer Bewegung der oberen Kugelhälfte auf die untere Kugelhälfte der Sicherungsstift nach außen über den Umfang der Kugel geschoben wird und gegen den inneren Umfang der Kugelpfanne der Kupplungsklaue drückt. Es ist aber auch möglich, dass zwischen den Kugelhälften ein elastomeres Material angeordnet ist, welches bei einer Bewegung der oberen Kugelhälfte auf die untere Kugelhälfte nach außen über den Umfang der Kugel geschoben wird und gegen den inneren Umfang der Kugelpfanne der Kupplungsklaue drückt. Die Bewegung der oberen Kugelhälfte gegenüber der unteren Kugelhälfte wird üblicherweise mittels einer in einer unterhalb der Kugel angeordneten Öffnung des Grundkörpers geführten und drehbaren Sechskantschraube durchgeführt, wobei die Sechskantschraube mit ihrem der Kugel zugewandten Ende in einen Spannbolzen greift und der Spannbolzen in einer Öffnung der oberen Kugelhälfte angeordnet ist.

In einer weiteren vorteilhaften Ausgestaltung des Verriegelungsmechanismus ist dieser selbst abschließbar. Dabei kann in einer Ausgestaltung der Verriegelungsmechanismus mit einem in die Öffnung, in der die Sechskantschraube geführt ist, einschiebbaren Schloss verschließbar sein.

Weitere Einzelheiten, Merkmale und Vorteile der Erfindung ergeben sich aus der folgenden Beschreibung mehrerer zeichnerisch dargestellter Ausführungsbeispiele.

Es zeigen
- Figur 1: eine schematische und teilweise geschnittene Darstellung einer erfindungsgemäßen Ankupplungshilfsvorrichtung gemäß einer ersten Ausführungsform;
- Figur 2: eine Aufsicht auf die erfindungsgemäßen Ankupplungshilfsvorrichtung gemäß Figur 1;
- Figur 3: eine Seitenansicht der erfindungsgemäßen Ankupplungshilfsvorrichtung gemäß Figur 1;
- Figur 4: eine Schnittdarstellung der erfindungsgemäßen Ankupplungshilfsvorrichtung gemäß einer zweiten Ausführungsform;
- Figur 5: eine Schnittdarstellung einer dritten Ausführungsform der erfindungsgemäßen Ankuppelungshilfsvorrichtung;
- Figur 6: eine Schnittdarstellung einer vierten Ausführungsform der erfindungsgemäßen Ankuppelungshilfsvorrichtung; und
- Figur 7: eine Schnittdarstellung einer fünften Ausführungsform der erfindungsgemäßen Ankuppelungshilfsvorrichtung

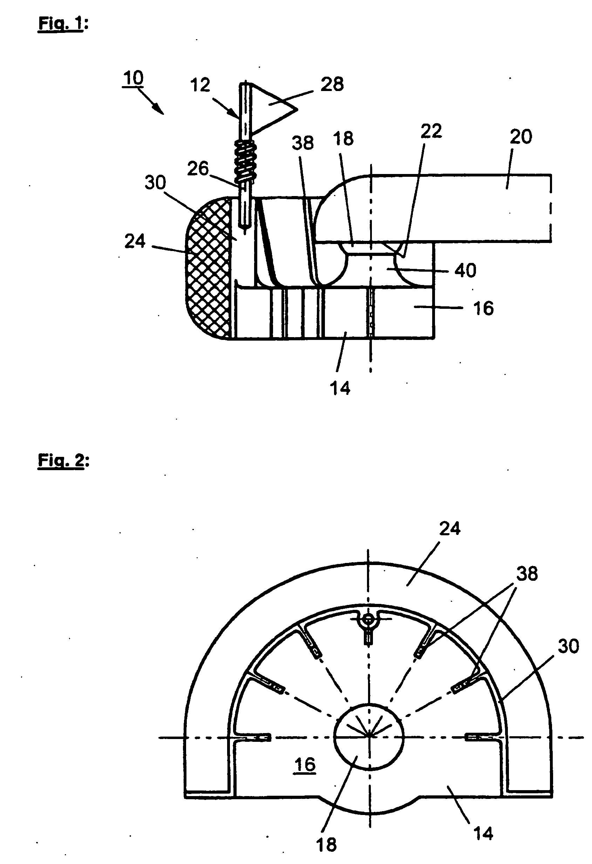

Figur 1 zeigt eine schematische und teilweise geschnittene Darstellung einer Ankupplungshilfsvorrichtung 10 gemäß einer ersten Ausführungsform. Die Ankupplungshilfsvorrichtung 10 weist dabei eine Anzeige- und Positioniervorrichtung 12 zur Anzeige der Position einer Anhängerkupplung des Anhängers relativ zu einem Zugfahrzeug auf. Man erkennt, dass die Ankupplungshilfsvorrichtung 10 aus einem Grundkörper 14 mit einem Bodenelement 16 besteht. Auf dem Bodenelement 16 ist ein Halteelement 40 zur Auflage und zum Halten einer Kugel 18 ausgebildet. Die Kugel 18 dient dabei zum Eingriff und zur lösbaren Befestigung mit einer Kugelpfanne 22 einer Kupplungsklaue 20 des Anhängers. Des Weiteren erkennt man, dass die Ankupplungshilfsvorrichtung 10 einen den Grundkörper 16 in Richtung des Zugfahrzeugs umgebenden Rammschutz 24 aus komprimierbarem Material aufweist. Der Rammschutz 24 schließt dabei in dem dargestellten Ausführungsbeispiel an eine Seitenwand 30 des Grundkörpers 14 an.

Die Anzeige- und Positioniervorrichtung 12 besteht in dem dargestellten Ausführungsbeispiel aus einer Stange 26 (in den Figuren jeweils verkürzt dargestellt) mit einem an einem Ende der Stange 26 angeordneten Anzeigewimpel 28. Auch andere optische oder akustische Signalgeber sind denkbar. Die Stange 26 ist dabei in dem Grundkörper 14 angeordnet. Es ist aber auch möglich, dass die Anzeige- und Positioniervorrichtung 12 mit dem Rammschutz 24 verbunden ist. Bei einer Berührung des Rammschutzes 24 erfolgt eine Komprimierung des Rammschutzes 24 und dadurch bedingt eine Bewegung der Anzeige- und Positioniervorrichtung 12. Durch diese Bewegung wird dem Fahrer des Zugfahrzeuges angezeigt, dass die Kupplungsvorrichtung des Zugfahrzeuges nunmehr an der Ankupplungshilfsvorrichtung 10 des Anhängers anliegt.

Des Weiteren erkennt man, dass die Seitenwände 30 des Grundkörpers 14 durch mehrere radial nach innen in Richtung der Kugel 18 zeigende Streben 38 verstärkt werden.

Der Rammschutz 24 und/oder der Grundkörper 14 bestehen üblicherweise aus Kunststoff oder Gummi. Dabei kann der Rammschutz 24 und der Grundkörper 14 einstückig ausgebildet sein. In dem dargestellten Ausführungsbeispiel ist der Rammschutz 24 abnehmbar ausgebildet. Es ist aber auch möglich, dass der Rammschutz 24 aus einem mit Gas oder Flüssigkeit gefüllten Volumen besteht (nicht dargestellt).

Figur 2 zeigt eine Aufsicht auf die Ankupplungshilfsvorrichtung 10 gemäß der in Figur 1 dargestellten Ausführungsform. Man erkennt, dass sowohl der Grundkörper 14 wie auch der Rammschutz 24 halbkreisförmig beziehungsweise U-förmig ausgebildet sind. Dabei umgibt der Rammschutz 24 den Grundkörper 14 nahezu vollständig und ist entlang der Seitenwand 30 des Grundkörpers 14 angeordnet.

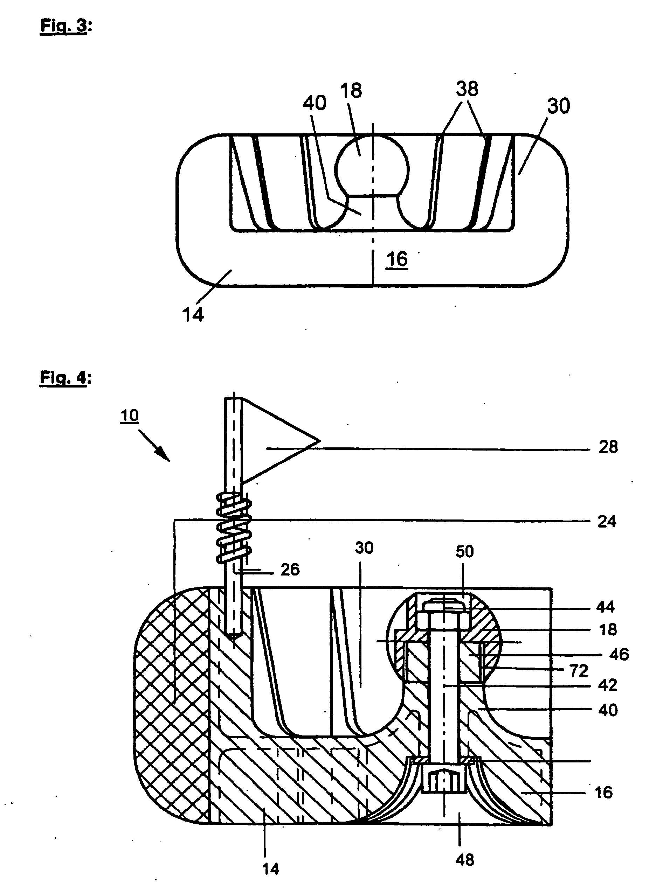

Figur 3 zeigt eine Seitenansicht der Ankupplungshilfsvorrichtung 10 gemäß dem in den Figuren 1 und 2 dargestellten Ausführungsbeispiel. Dabei wird insbesondere die Ausgestaltung des Grundkörpers 14 mit den nach innen radial angeordneten Streben 38 deutlich. Des Weiteren erkennt man, dass die Kugel 18 in ihrem nach außen zeigenden Bereich vollständig ausgebildet ist und auf dem Halteelement 40 aufsitzt. Die Kugel 18 sowie das Halteelement 40 können dabei einstückig mit dem Grundkörper 14 ausgebildet sein. Es ist aber auch möglich, dass die Kugel 18 und/oder das Halteelement 40 mit dem Grundkörper 14 verklebt oder verschraubt sind.

Figur 4 zeigt eine Schnittdarstellung einer Ankupplungshilfsvorrichtung 10 gemäß einer zweiten Ausführungsform. Man erkennt wiederum, dass an der Seitenwand 30 des Grundkörpers 14 der Rammschutz 24 angeordnet ist. Die dargestellte Ankupplungshilfsvorrichtung 10 weist einen Grundkörper 14 auf, der in dem Bodenelement 16 eine Öffnung 48 aufweist, wobei innerhalb der Öffnung 48, die durch das Bodenelement 16 und das Halteelement 40 hindurch verläuft, eine Innensechskantschraube 42 geführt und drehbar ist. Das der Kugel 18 zugewandte Ende der Innensechskantschraube 42 greift dabei in eine selbstsichernde Mutter 44, die innerhalb einer Öffnung 50 in der Kugel 18 angeordnet ist. In einer weiteren, der Öffnung 50 gegenüberliegenden Ausnehmung 72 der Kugel 18 ist eine Hülse 46 angeordnet, die der Führung der Innensechskantschraube 42 innerhalb der Kugel 18 dient.

Des Weiteren erkennt man, dass bei diesem Ausführungsbeispiel der Ankupplungshilfsvorrichtung 10 die Seitenwand 30 und der Rammschutz 24 über die Kugel 18 hinausragend ausgebildet sind.

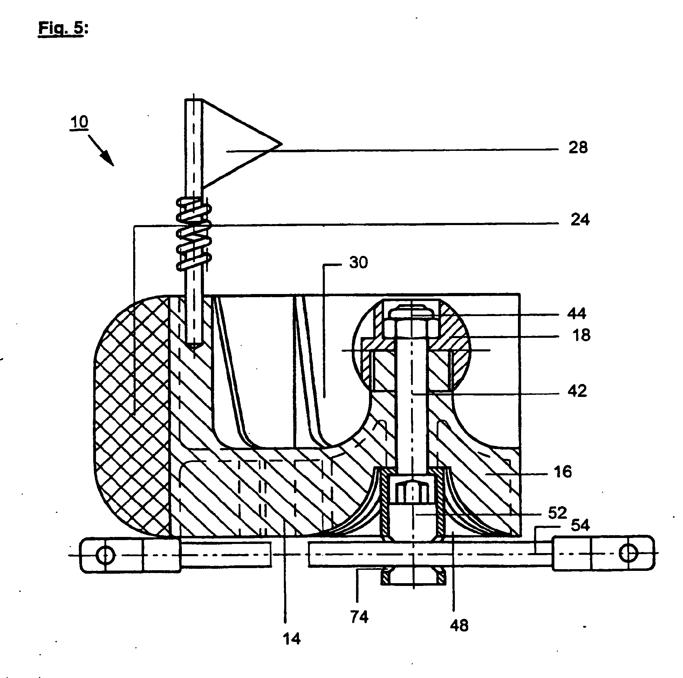

Figur 5 zeigt eine Schnittdarstellung einer dritten Ausführungsform der Ankupplungshilfsvorrichtung 10. Dabei ist zusätzlich zu der in Figur 4 beschriebenen zweiten Ausführungsform der Ankupplungshilfsvorrichtung 10 in dieser Ausführungsform in der Öffnung 48 des Bodenelementes 16 des Grundkörpers 14 eine zusätzliche Hülse 52 angeordnet, die über die Innensechskantschraube 42 an dem Bodenelement 16 befestigt wird. Die Hülse 52 ragt dabei aus dem Bodenelement 16 heraus und weist an dem herausragenden Abschnitt eine Öffnung 74 zur Durchführung eines Sicherungsseils 54 auf. Das Sicherungsseil 54 verhindert dabei das ungewollte Entfernen der Ankupplungshilfsvorrichtung 10 von dem Anhänger.

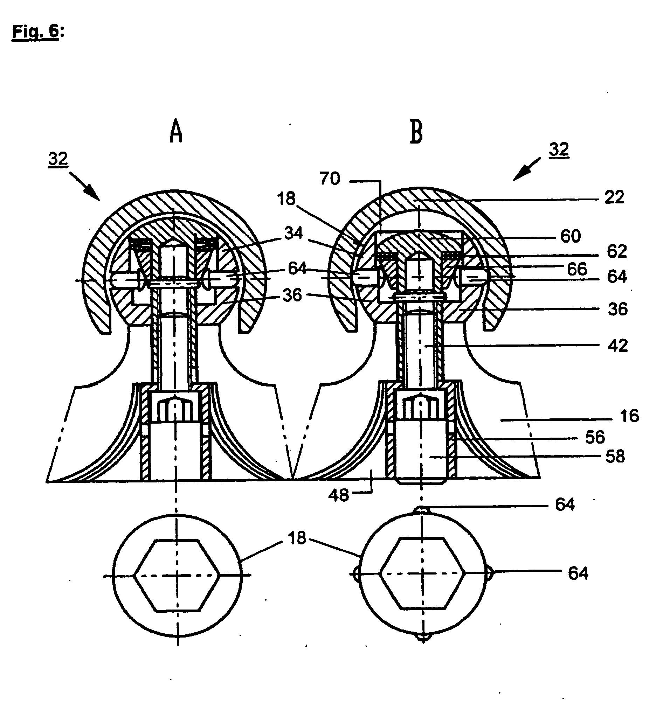

Figur 6 zeigt eine Schnittdarstellung einer vierten Ausführungsform der Ankupplungshilfsvorrichtung 10. Zusätzlich zu den bisher beschriebenen Merkmalen weist diese Ausführungsform eine Kugel 18 mit einem Verriegelungsmechanismus 32 zur Verriegelung der Kugel 18 mit der Kugelpfanne 22 der Kupplungsklaue 20 des Anhängers auf. Dabei besteht der Verriegelungsmechanismus 32 aus einer zweiteilig aufgebauten Kugel 18 mit einer oberen und einer unteren Kugelhälfte 34, 36 sowie vier Spreizstiften 64, die zwischen den Kugelhälften 34, 36 angeordnet sind. Die obere Kugelhälfte 34 ist dabei gegenüber der unteren Kugelhälfte 36 bewegbar ausgebildet. Die Bewegung der oberen Kugelhälfte 34 gegenüber der unteren Kugelhälfte 36 wird dabei mittels der in der unterhalb der Kugel 18 angeordneten Öffnung 48 des Grundkörpers geführten und drehbaren Sechskantschraube beziehungsweise Innensechskantschraube 42 durchgeführt. Die Innensechskantschraube 42 greift dabei mit ihrem der Kugel 18 zugewandten Ende in einen Spannbolzen 60, wobei der Spannbolzen 60 in einer Öffnung 70 der oberen Kugelhälfte 36 zu liegen kommt. Man erkennt, dass der Spannbolzen 60 gegen einen Kegel 66 drückt, der wiederum mit seinem Umfang gegen die Spreizstifte 64 drückt. Wird nunmehr die obere Kugelhälfte 34 beziehungsweise der Spannbolzen 60 in Richtung des Bodenelementes 16 des Grundkörpers 14 gedrückt, so werden die Spreizstifte 64 nach außen über den Umfang der Kugel 18 geschoben und drücken gegen den inneren Umfang der Kugelpfanne 22. Zwischen dem Kopf des Spannbolzens 60 und dem Kegel 66 ist zudem eine Tellerfeder 62 angeordnet, die einerseits für ein leichtes Lösen der Verriegelung dient und andererseits einen Gegendruck gegenüber einer zu großen Druckbeanspruchung der oberen Kugelhälfte 34 beziehungsweise des Spannbolzens 60 bewirken. Die mit A bezeichnete Darstellung des Verriegelungsmechanismus 32 zeigt den Verriegelungsmechanismus 32 in nicht aktiviertem Zustand, d. h. mit Spreizstiften 64, die sich noch innerhalb des Kugelumfangs der Kugel 18 befinden. Die mit B gekennzeichnete Darstellung zeigt den Verriegelungsmechanismus 32 mit ausgefahrenen Spreizstiften 64.

Des Weiteren erkennt man in Figur 6, dass der Verriegelungsmechanismus 32 verschließbar ist. Hierzu wird in die Öffnung 48 des Bodenelementes 16 eine zusätzliche Schlossaufnahme 56 eingeführt. Die Verbindung der Schlossaufnahme 56 mit dem Bodenelement 16 erfolgt dabei über die Innensechskantschraube 42. In die Schlossaufnahme 56 kann dann ein Schloss 58 eingesetzt werden.

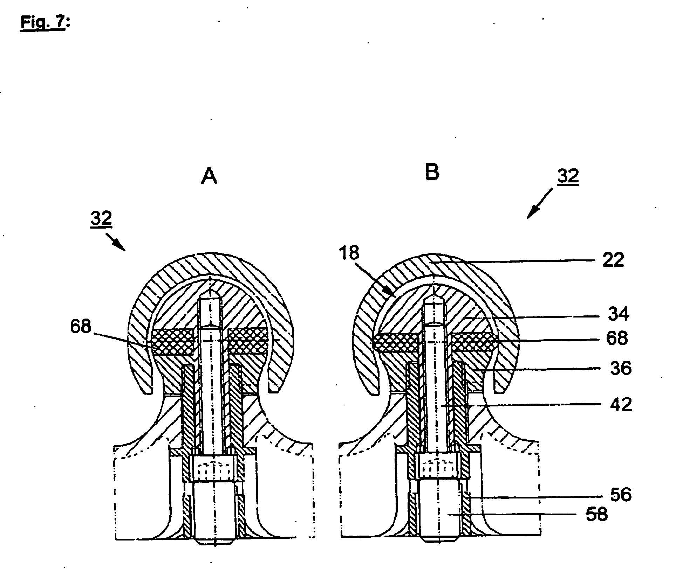

In einer weiteren Ausführungsform, wie in Figur 7 dargestellt, besteht der Verriegelungsmechanismus 32 wiederum aus einer zweiteilig aufgebauten Kugel 18 mit einer oberen und einer unteren Kugelhälfte 34, 36. Zwischen die Kugelhälften 34, 36 ist jedoch ein elastomeres Material 68 angeordnet. Die obere Kugelhälfte 34 ist gegenüber der unteren Kugelhälfte 36 wiederum bewegbar ausgebildet, so dass bei einer Bewegung der oberen Kugelhälfte 34 auf die untere Kugelhälfte 36 das elastomere Material 68 nach außen über den Umfang der Kugel 18 geschoben wird und gegen den inneren Umfang der Kugelpfanne 22 drückt. Auch hierdurch ist eine zuverlässige Verriegelung der Kugel 18 mit der Kugelpfanne 22 der Kupplungsklaue 20 möglich. Auch dieser Verriegelungsmechanismus 32 ist mittels des Schlosses 58 verschließbar. Die mit A bezeichnete Darstellung des Verriegelungsmechanismus 32 zeigt den Verriegelungsmechanismus 32 in nicht aktiviertem Zustand, d. h. mit einem elastischen Material 68, welches sich noch innerhalb des Kugelumfangs der Kugel 18 befindet. Die mit B gekennzeichnete Darstellung zeigt den Verriegelungsmechanismus 32 mit ausgeschobenen elastischen Material 68.

## Patentansprüche

1. Ankupplungshilfsvorrichtung für Anhänger, insbesondere Wohnwagen, wobei die Ankupplungshilfsvorrichtung (10) mindestens eine Anzeige- und Positioniervorrichtung (12) zur Anzeige der Position einer Anhängerkupplung des Anhängers relativ zu einem Zugfahrzeug aufweist, und die Ankupplungshilfsvorrichtung (10) aus einem Grundkörper (14) mit einer Kugel (18) zum Eingriff und zur lösbaren Befestigung mit einer Kugelpfanne (22) einer Kupplungsklaue (20) des Anhängers besteht,
**dadurch gekennzeichnet,**
**dass** die Ankupplungshilfsvorrichtung weiterhin einen den Grundkörper (14) zumindest teilweise in Richtung des Zugfahrzeugs umgebenden Rammschutz (24) aus komprimierbarem Material umfasst, wobei die Anzeige- und Positioniervorrichtung (12) in dem Grundkörper (14) oder dem Rammschutz (24) angeordnet ist.

2. Ankupplungshilfsvorrichtung nach Anspruch 1,
**dadurch gekennzeichnet,**
**dass** der Rammschutz (24) aus Kunststoff oder Gummi besteht.

3. Ankupplungshilfsvorrichtung nach Anspruch 1 oder 2,
**dadurch gekennzeichnet,**
**dass** der Grundkörper (14) aus Kunststoff oder Gummi besteht.

4. Ankupplungshilfsvorrichtung nach einem der vorhergehenden Ansprüche,
**dadurch gekennzeichnet,**
**dass** der Rammschutz (24) und der Grundkörper (14) einstückig ausgebildet sind.

5. Ankupplungshilfsvorrichtung nach einem der Ansprüche 1 bis 3,
**dadurch gekennzeichnet,**
**dass** der Rammschutz (24) vom Grundkörper (14) abnehmbar ausgebildet ist.

6. Ankupplungshilfsvorrichtung nach Anspruch 1,
**dadurch gekennzeichnet,**
**dass** der Rammschutz (24) aus einem mit Gas oder Flüssigkeit gefüllten Volumen besteht.

7. Ankupplungshilfsvorrichtung nach Anspruch 6,
**dadurch gekennzeichnet,**
**dass** das Volumen aus einem Luftreifen oder -schlauch besteht.

8. Ankupplungshilfsvorrichtung nach einem der vorhergehenden Ansprüche,
**dadurch gekennzeichnet,**
**dass** der Rammschutz (24) die Kugel (18) in Richtung des Zugfahrzeugs zumindest teilweise umschließt.

9. Ankupplungshilfsvorrichtung nach einem der vorhergehenden Ansprüche,
**dadurch gekennzeichnet,**
**dass** eine den Grundkörper (14) umgebende Seitenwand (30) die Kugel (18) in Richtung des Zugfahrzeugs zumindest teilweise umschließt.

10. Ankupplungshilfsvorrichtung nach Anspruch 8 oder 9,
**dadurch gekennzeichnet,**
**dass** der Rammschutz (24) oder die den Grundkörper (14) umgebende Seitenwand (30) die Kugel (18) in Richtung des Zugfahrzeugs zumindest teilweise halbkreisförmig umschließt.

11. Ankupplungshilfsvorrichtung nach Anspruch 8 oder 9,
**dadurch gekennzeichnet,**
**dass** der Rammschutz (24) und die den Grundkörper (14) umgebende Seitenwand (30) die Kugel (18) in Richtung des Zugfahrzeugs zumindest teilweise halbkreisförmig umschließen.

12. Ankupplungshilfsvorrichtung nach einem der Ansprüche 8 bis 11,
**dadurch gekennzeichnet,**
**dass** der Rammschutz (24) oder die den Grundkörper (14) umgebende Seitenwand (30) über die Kugel (18) hinausragend ausgebildet sind.

13. Ankupplungshilfsvorrichtung nach einem der Ansprüche 8 bis 11,
**dadurch gekennzeichnet,**
**dass** der Rammschutz (24) und die den Grundkörper (14) umgebende Seitenwand (30) über die Kugel (18) hinausragend ausgebildet sind.

14. Ankupplungshilfsvorrichtung nach einem der vorhergehenden Ansprüche,
**dadurch gekennzeichnet,**
**dass** die Anzeige- und Positioniervorrichtung (12) aus einer Stange (26) mit mindestens einem Anzeigewimpel (28) oder anderen optischen oder akustischen Signalgebern oder einer Kombination daraus besteht.

15. Ankupplungshilfsvorrichtung nach einem der vorhergehenden Ansprüche,
**dadurch gekennzeichnet,**
**dass** die Kugel (18) mit dem Grundkörper (14) lösbar verbunden ist.

16. Ankupplungshilfsvorrichtung nach einem der vorhergehenden Ansprüche,
**dadurch gekennzeichnet,**
**dass** die Kugel (18) einen Verriegelungsmechanismus (32) zur Verriegelung der Kugel (18) mit der Kugelpfanne (22) der Kupplungsklaue (20) des Anhängers aufweist.

17. Ankupplungshilfsvorrichtung nach Anspruch 16,
**dadurch gekennzeichnet,**
**dass** der Verriegelungsmechanismus (32) aus einer zweiteilig aufgebauten Kugel (18) mit einer oberen und einer unteren Kugelhälfte (34, 36) sowie mindestens einem Spreizstift (64), der zwischen den Kugelhälften (34, 36) angeordnet ist, besteht, wobei die obere Kugelhälfte (34) gegenüber der unteren Kugelhälfte (36) bewegbar ausgebildet ist und bei einer Bewegung der oberen Kugelhälfte (34) auf die untere Kugelhälfte (36) der Spreizstift (64) nach außen über den Umfang der Kugel (18) geschoben wird und gegen den inneren Umfang der Kugelpfanne (22) drückt.

18. Ankupplungshiffsvorrichtung nach Anspruch 16,
**dadurch gekennzeichnet,**
**dass** der Verriegelungsmechanismus (32) aus einer zweiteilig aufgebauten Kugel (18) mit einer oberen und einer unteren Kugelhälfte (34, 36) besteht, wobei zwischen den Kugelhälften (34, 36) ein elastomeres Material (68) angeordnet ist und die obere Kugelhälfte (34) gegenüber der unteren Kugelhälfte (36) bewegbar ausgebildet ist, so dass bei einer Bewegung der oberen Kugelhälfte (34) auf die untere Kugelhälfte (36) das elastomere Material (68) nach außen über den Umfang der Kugel (18) geschoben wird und gegen den inneren Umfang der Kugelpfanne (22) drückt.

19. Ankupplungshilfsvorrichtung nach Anspruch 17 oder 18,
**dadurch gekennzeichnet,**
**dass** die Bewegung der oberen Kugelhälfte (34) gegenüber der unteren Kugelhälfte (36) mittels einer in einer unterhalb der Kugel (18) angeordneten Öffnung (48) des Grundkörpers (14) geführten und drehbaren Innensechskantschraube (42) erfolgt, wobei die Innensechskantschraube (42) mit ihrem der Kugel (18) zugewandten Ende in einen Spannbolzen (60) greift und der Spannbolzen (60) in einer Öffnung (70) der oberen Kugelhälfte (36) angeordnet ist.

20. Ankupptungshilfsvorrichtung nach einem der Ansprüche 16 bis 19,
**dadurch gekennzeichnet,**
**dass** der Verriegelungsmechanismus (32) verschließbar ist.

21. Ankupplungshilfsvorrichtung nach Anspruch 20,
**dadurch gekennzeichnet,**
**dass** der Verriegelungsmechanismus (32) mit einem in die Öffnung (48) des Grundkörpers (14) einschiebbaren Schloss (58) verschließbar ist.

## Claims

1. Auxiliary coupling device for trailers, in particular caravans, wherein the auxiliary coupling device (10) has hat least one indicating and positioning device (12) for indicating the position of a trailer coupling of the trailer relative to a towing vehicle, and the auxiliary coupling device (10) is constituted by a base body (14) with a ball (18) for engagement with and detachable attachment to a ball socket (22) of a coupling claw (20) of the trailer,
**characterized in that**
the auxiliary coupling device further has an impact protection (24) of compressible material at least partially surrounding the base body (14) towards the towing vehicle, wherein the indicating and positioning device (12) is disposed in the base body (14) or the impact protection (24).

2. Auxiliary coupling device according to claim 1,
**characterized in that**
the impact protection (24) is made of plastic or rubber.

3. Auxiliary coupling device according to claim 1 or 2,
**characterized in that**
the base body (14) is made of plastic or rubber.

4. Auxiliary coupling device according to anyone of the preceding claims,
**characterized in that**
the impact protection (24) and the base body (14) are integrally formed.

5. Auxiliary coupling device according to any one of claims 1 to 3,
**characterized in that**
the impact protection (24) is formed detachably from the base body (14).

6. Auxiliary coupling device according to claim 1,
**characterized in that**
the impact protection (24) is constituted by a volume filled with gas or liquid.

7. Auxiliary coupling device according to claim 6,
**characterized in that**
the volume is constituted by an air tire or hose.

8. Auxiliary coupling device according to anyone of the preceding claims,
**characterized in that**
the impact protection (24) at least partially encloses the ball (18) towards the towing vehicle.

9. Auxiliary coupling device according to anyone of the preceding claims,
**characterized in that**
a sidewall (30) surrounding the base body (14) at least partially encloses the ball (18) towards the towing vehicle.

10. Auxiliary coupling device according to claim 8 or 9,
**characterized in that**
the impact protection (24) or the sidewall (30) surrounding the base body (14) at least partially semi-circularly encloses the ball (18) towards the towing vehicle.

11. Auxiliary coupling device according to claim 8 or 9,
**characterized in that**
the impact protection (24) and the sidewall (30) surrounding the base body (14) at least partially semi-circularly enclose the ball (18) towards the towing vehicle.

12. Auxiliary coupling device according to any one of claims 8 to 11,
**characterized in that**
the impact protection (24) or the sidewall (30) surrounding the base body (14) is formed protruding beyond the ball (18).

13. Auxiliary coupling device according to any one of claims 8 to 11,
**characterized in that**
the impact protection (24) and the sidewall (30) surrounding the base body (14) are formed protruding beyond the ball (18).

14. Auxiliary coupling device according to anyone of the preceding claims,
**characterized in that**
the indicating and positioning device (12) is constituted by a rod (26) with at least one indicating pennant (28) or other optic or acoustic signalers or a combination thereof.

15. Auxiliary coupling device according to anyone of the preceding claims,
**characterized in that**
the ball (18) is detachably connected to the base body (14).

16. Auxiliary coupling device according to anyone of the preceding claims,
**characterized in that**
the ball (18) has a locking mechanism (32) for locking the ball (18) to the ball socket (22) of the coupling claw (20) of the trailer.

17. Auxiliary coupling device according to claim 16,
**characterized in that**
the locking mechanism (32) is constituted by a two-part constructed ball (18) having an upper and a lower ball half (34, 36) as well as at least one spreading pin (64) disposed between the ball halves (34, 36), wherein the upper ball half (34) is formed movably with respect to the lower ball half (36), and upon movement of the upper ball half (34) to the lower ball half (36), the spreading pin (64) is pushed outwards beyond the circumference of the ball (18) and presses against the inner circumference of the ball socket (22).

18. Auxiliary coupling device according to claim 16,
**characterized in that**
the locking mechanism (32) is constituted by a two-part constructed ball (18) having an upper and a lower ball half (34, 36), wherein an elastomeric material (68) is disposed between the ball halves (34, 36), and the upper ball half (34) is formed movably with respect to the lower ball half (36), such that upon movement of the upper ball half (34) to the lower ball half (36), the elastomeric material (68) is pushed outwards beyond the circumference of the ball (18) and presses against the inner circumference of the ball socket (22).

19. Auxiliary coupling device according to claim 17 or 18,
**characterized in that**
the movement of the upper ball half (34) with respect to the lower ball half (36) is effected by means of a hexagon socket screw (42) guided and rotatable in an opening (48) of the base body (14) disposed below the ball (18), wherein the hexagon socket screw (42) engages with a clamping bolt (60) with its end facing the ball (18) and the clamping bolt (60) is disposed in an opening (70) of the upper ball half (36).

20. Auxiliary coupling device according to any one of claims 16 to 19,
**characterized in that**
the locking mechanism (32) is lockable.

21. Auxiliary coupling device according to claim 20,
**characterized in that**
the locking mechanism (32) is lockable by a lock (58) insertable into the opening (48) of the base body (14).

## Revendications

1. Mécanisme auxiliaire d'attelage pour remorques, en particulier des caravanes, le mécanisme auxiliaire d'attelage (10) présentant au moins un mécanisme d'affichage et de positionnement (12), destiné à afficher la position d'un attelage de la remorque par rapport à un véhicule tracteur et le mécanisme auxiliaire d'attelage (10) se composant d'un corps de base (14) avec une boule (18), destinée à la mise en prise et à la fixation amovible avec un coussinet sphérique (22) d'une griffe d'accouplement (20) de la remorque,
**caractérisé en ce**
**que** le mécanisme auxiliaire d'attelage cerne en outre un pare-chocs (24) en matériau compressible, pare-chocs qui entoure le corps de base (14) au moins en partie dans la direction du véhicule tracteur, le mécanisme d'affichage et de positionnement (12) étant disposé dans le corps de base (14) ou dans le pare-chocs (24).

2. Mécanisme auxiliaire d'attelage selon la revendication 1,
**caractérisé en ce**
**que** le pare-chocs (24) se compose de matière plastique ou de caoutchouc.

3. Mécanisme auxiliaire d'attelage selon la revendication 1 ou 2,
**caractérisé en ce**
**que** le corps de base (14) se compose de matière plastique ou de caoutchouc.

4. Mécanisme auxiliaire d'attelage selon l'une des revendications précédentes,
**caractérisé en ce**
**que** le pare-chocs (24) et le corps de base (14) sont constitués d'un seul morceau.

5. Mécanisme auxiliaire d'attelage selon l'une des revendications 1 à 3,
**caractérisé en ce**
**que** le pare-chocs (24) est constitué de manière à pouvoir être séparé du corps de base (14).

6. Mécanisme auxiliaire d'attelage selon la revendication 1,
**caractérisé en ce**
**que** le pare-chocs (24) se compose d'un volume rempli de gaz ou de liquide.

7. Mécanisme auxiliaire d'attelage selon la revendication 6,
**caractérisé en ce**
**que** le volume se compose d'un pneumatique ou d'une chambre à air.

8. Mécanisme auxiliaire d'attelage selon l'une des revendications précédentes,
**caractérisé en ce**
**que** le pare-chocs (24) cerne au moins en partie la boule (18) dans la direction du véhicule tracteur.

9. Mécanisme auxiliaire d'attelage selon l'une des revendications précédentes,
**caractérisé en ce**
**qu'**une paroi latérale (30), qui entoure le corps de base (14), cerne au moins en partie la boule (18) dans la direction du véhicule tracteur.

10. Mécanisme auxiliaire d'attelage selon la revendication 8 ou 9,
**caractérisé en ce**
**que** le pare-chocs (24) ou la paroi latérale (30), qui entoure le corps de base (14), cerne la boule (18) au moins en partie en demi-cercle dans la direction du véhicule tracteur.

11. Mécanisme auxiliaire d'attelage selon la revendication 8 ou 9,
**caractérisé en ce**
**que** le pare-chocs (24) et la paroi latérale (30), qui entoure le corps de base (14), cernent la boule (18) au moins en partie en demi-cercle dans la direction du véhicule tracteur.

12. Mécanisme auxiliaire d'attelage selon l'une des revendications 8 à 11,
**caractérisé en ce**
**que** le pare-chocs (24) ou la paroi latérale (30), qui entoure le corps de base (14), est constitué en saillie au-dessus de la boule (18).

13. Mécanisme auxiliaire d'attelage selon l'une des revendications 8 à 11,
**caractérisé en ce**
**que** le pare-chocs (24) et la paroi latérale (30), qui entoure le corps de base (14), sont constitués en saillie au-dessus de la boule (18).

14. Mécanisme auxiliaire d'attelage selon l'une des revendications précédentes,
**caractérisé en ce**
**que** le mécanisme d'affichage et de positionnement (12) se compose d'une barre (26) avec au moins un fanion d'affichage (28) ou autre émetteur de signaux optiques ou acoustiques ou une combinaison d'entre eux.

15. Mécanisme auxiliaire d'attelage selon l'une des revendications précédentes,
**caractérisé en ce**
**que** la boule (18) est reliée au corps de base (14) de manière détachable.

16. Mécanisme auxiliaire d'attelage selon l'une des revendications précédentes,
**caractérisé en ce**
**que** la boule (18) présente un mécanisme de verrouillage (32), destiné à verrouiller la boule (18) avec le coussinet sphérique (22) de la griffe d'accouplement (20) de la remorque.

17. Mécanisme auxiliaire d'attelage selon la revendication 16,
**caractérisé en ce**
**que** le mécanisme de verrouillage (32) se compose d'une boule (18), constituée en deux parties, avec une moitié de boule supérieure et inférieure (34, 36), ainsi qu'au moins une broche d'écartement (64), qui est disposée entre les demi-boules (34, 36), la demi-boule supérieure (34) étant constituée de manière mobile face à la demi-boule inférieure (36) et la broche d'écartement (64) étant déplacée, en cas de mouvement de la demi-boule supérieure (34) sur la demi-boule inférieure (36), vers l'extérieur au-dessus de la périphérie de la boule (18) et appuyant contre le périmètre intérieur du coussinet sphérique (22).

18. Mécanisme auxiliaire d'attelage selon la revendication 16,
**caractérisé en ce**
**que** le mécanisme de verrouillage (32) se compose d'une boule (18) constituée en deux parties, avec une moitié de boule supérieure et inférieure (34, 36), un matériau élastomère (68) étant disposé entre les demi-boules (34, 36) et la demi-boule supérieure (34) étant constituée de manière mobile face à la demi-boule inférieure (36), de sorte qu'en cas de mouvement de la demi-boule supérieure (34) sur la demi-boule inférieure (36), le matériau élastomère (68) est déplacé vers l'extérieur au dessus de la périphérie de la boule (18) et appuie contre le périmètre intérieur du coussinet sphérique (22).

19. Mécanisme auxiliaire d'attelage selon la revendication 17 ou 18,
**caractérisé en ce**
**que** le mouvement de la demi-boule supérieure (34) face à la demi-boule inférieure (36) s'effectue au moyen d'une vis à tête à six pans creux (42), pivotante et guidée dans une ouverture (48) du corps de base (14), ouverture disposée au-dessous de la boule (18), la vis à tête à six pans creux (42) se mettant en prise, avec son extrémité tournée vers la boule (18), dans un boulon de serrage (60) et le boulon de serrage (60) étant disposé dans une ouverture (70) de la demi-boule supérieure (36).

20. Mécanisme auxiliaire d'attelage selon l'une des revendications 16 à 19,
**caractérisé en ce**
**que** le mécanisme de verrouillage (32) peut être fermé à clé.

21. Mécanisme auxiliaire d'attelage selon la revendication 20,
**caractérisé en ce**
**que** le mécanisme de verrouillage (32) peut être fermé à clé avec une serrure (58), enfichable dans l'ouverture (48) du corps de base (14).
